# EUROPEAN PATENT SPECIFICATION

(11) **EP 2 630 389 B1**
(45) Date of publication and mention of the grant of the patent: **07.08.2019**
(21) Application number: 11773261.0
(22) Date of filing: 21.10.2011
(51) Int. Cl.: F16F 9/46, F16F 9/348

(54) **VALVE ARRANGEMENT**
VENTILANORDNUNG
AGENCEMENT DE SOUPAPE

(30) Priority: 22.10.2010 EP 10188594
(43) Date of publication of application: 28.08.2013
(73) Proprietor: ÖHLINS RACING AB, 194 27 Upplands Väsby (SE)
(72) Inventor: EWERS, Benny, S-194 27 Upplands Väsby (SE); SÖNSTERÖD, Lars, S-194 27 Upplands Väsby (SE); MALMBORG, Håkan, S-194 27 Upplands Väsby (SE)
(74) Representative: AWA Sweden AB
(86) International application number: PCT/EP2011/068436
(87) International publication number: WO 2012/052546

(56) References cited:
- DE-A1- 3 528 830
- GB-A- 2 222 227
- US-B1- 6 371 262

## Description

### Technical field of the invention

The present invention relates to a valve arrangement for controlling a main flow of damping medium in a shock absorber from a first chamber to a second chamber during a first stroke and from the second chamber to the first chamber during a second stroke.

### Technical background

Generally, within the technical field of shock absorbers that include pilot valves, a pressure regulator, i.e. a valve arrangement, is used to control a flow of damping medium between a compression chamber and a rebound chamber during a reciprocal motion of a piston in a damping medium filled chamber of the shock absorber. The piston, via a piston rod, is connected either to a wheel or a chassis of, whereas the chamber is connected to one of the wheel or chassis that the piston is not connected to. During a compression stroke the piston moves in a direction towards the compression chamber and thereby pressurizes the damping medium in the compression chamber. During a rebound stroke, the piston moves towards the rebound chamber, i.e. in the opposite direction, and thereby pressurizes the damping medium in the rebound chamber. In accordance with the function of the shock absorber, the pressurized damping medium needs to be transferred from the pressurized chamber to the other chamber, i.e. from the compression chamber to the rebound chamber or vice versa. The flow of damping medium needs to be controlled to obtain a damping effect of the piston and thus the shock absorber, i.e. to damp relative motion between the wheel and chassis.

The control of the pressure in the flow of damping medium in the shock absorber depends on the pressure created by the pilot valve due to the speed of movement of the piston. Pressure regulators in shock absorbers are usually provided with a movable adjustment part, such as a washer or a cone that acts against a seat part. The pressure control is achieved by equilibrium of forces on the movable adjustment part between a regulator force and supplemental opposing forces, such as one or more of a spring force, flow force, valve damping force, friction force or pilot pressure force. When the piston of the shock absorber moves at a speed such that the regulator forces become greater than the opposing forces, the movable adjustment part is forced to open. Thus, the movable adjustment part is forced to open at a stroke defined as a function of the flow produced by the pressure acting on the regulating area of the pressure regulator.

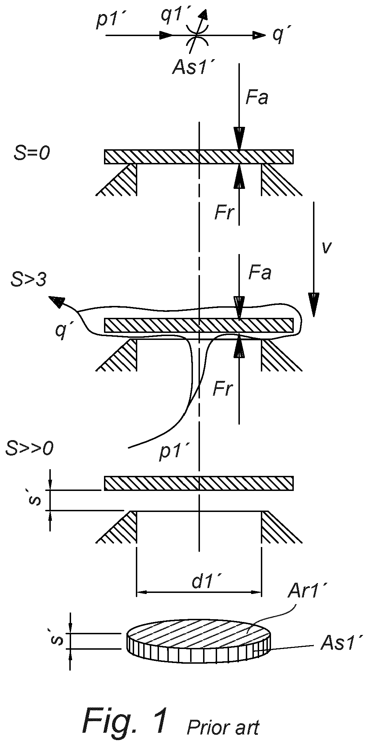

In a simple form of a pressure regulator, see Fig. 1, a valve member in the form of a plane washer, cone, or the like rests against a seat. The pressure regulator has a regulating area dependent only on one diameter d1', defined as the area subjected to a regulator pressure due to flow of damping medium. Thus, the pressure regulator includes a valve member which, at various degrees, opens and closes an opening of a channel which fluidly interconnects two volumes, i.e. the compression and rebound chamber volumes, and an actuator which resiliently exerts an actuating force on the valve member. The actuator may itself be a resiliently force exerting element or may constitute a passive element upon which the resilient force exerting element exerts the resilient force. The regulator force can be defined as the regulator pressure p1 times the regulator area. The flow moves past the washer and is throttled by curtain areas As1', defined by the stroke s' and the diameter d1'. This variant of pressure regulator thus opens at a regulator force value and is kept open as long as the regulator force is at or above this regulator force value or increases its stroke s when Fr is bigger than Fa but is standing still when Fa is biasing Fr, that is Fa=Fr. When Fr is lower than Fa the regulator is closing, reducing its stroke s. In closed position Fr can be lower than Fa without any change of position when s=0. Thus, the pressure regulator abruptly opens at a predetermined pressure difference across the washer, determined by the regulator force Fr and the opposing forces, i.e. the actuating forces, which can be a total opposing force Fa, created by either or all of the spring forces Fs, pilot forces Fp, and other flow and friction forces Fq.

However, during dynamical events during the operation of the shock absorber, the regulator force and the total opposing force may reciprocally interact in an oscillating manner which, in turn, would affect the valve member and the thereupon acting actuator. This may cause unwanted oscillation or self-oscillation of the parts of the shock absorber which, in turn, may generate unwanted noise and/or will cause bad comfort in the vehicle. In addition to this, an inherent property of resilient force exerting element is that they may oscillate or self-oscillate which would contribute to the unwanted noise and/or bad comfort. Thus, one problem with such pressure regulators is that such pressure regulators may generate unwanted noise in the vehicle.

DE3528830A1 and EP1975453A2 both disclose a damping device for a cylinder unit, which is attached as part of a suspension system between sprung and unsprung masses of a vehicle.

### Summary of the invention

An object with the present invention is to provide an improved valve arrangement for controlling a main flow of damping medium in a shock absorber from a first chamber to a second chamber during a first stroke and from the second chamber to the first chamber during a second stroke.

This and other objects are achieved by providing a valve arrangement having the features defined in the independent claim. Preferred embodiments are defined in the dependent claims.

According to a first aspect of the present invention, there is provided a valve arrangement for controlling a main flow of damping medium in a shock absorber from a first chamber to a second chamber during a first stroke and from the second chamber to the first chamber during a second stroke. The valve arrangement comprises a first actuator having a first actuator chamber communicating with said first chamber and said second chamber, said first actuator, during said first stroke, being arranged to actuate on said main flow of damping medium in response to a first actuating pressure in the first actuator chamber; a pilot valve being arranged to control the first actuating pressure, the pilot valve having a pilot chamber being in fluid communication with the first actuator chamber; a first restriction arrangement for restricting a flow of damping medium from the first actuator chamber to the pilot chamber, said first restriction arrangement being arranged to provide a first flow path restricted by a first flow restriction area during a first stroke and to provide a second flow path restricted by a second flow restriction area during the second stroke; and a first sub valve arrangement comprising a first valve member, said first valve member being in a first end position during the first stroke and being in a second end position during the second stroke, wherein said first valve member being arranged to co-operate with said first restriction arrangement such that the flow of damping medium from the first actuator chamber to the pilot chamber flows via said first flow path when said first valve member is in the first end position and flows via said second flow path when said first valve member is in the second end position.

It is understood that said pilot valve is arranged to control at least the first actuating pressure, i.e. the pilot valve is able to control two actuators. In that case, it is further understood that the pilot chamber of the pilot valve is in fluid communication with both actuator chambers. Moreover, the pilot chamber also communicates with the first chamber and second chamber, i.e. during the first stroke the pilot chamber is in fluid communication with the second chamber and during the second stroke the pilot chamber is in fluid communication with the first chamber

When said first valve member is in the first end position during the first stroke, the first valve member closes the fluid communication between the first actuator chamber and the second chamber, i.e. the first actuator chamber is not in fluid communication with said second chamber. However, as is understood, the first actuator chamber is in fluid communication with said first chamber. Furthermore, when said first valve member is in the second end position, the first valve member opens the fluid communication between the first actuator chamber and the second chamber, i.e. the first actuator chamber is in fluid communication with said second chamber. However, as is understood, the first actuator chamber is not in fluid communication with said first chamber.

As envisage by the skilled person, the shock absorber is provided with a piston which divides the shock absorber chamber into a first chamber and a second chamber. Furthermore, the piston reciprocally moves within the shock absorber chamber. During a first stroke, the piston moves towards the first chamber and pressurizes the damping medium therein which thereafter flows to the second chamber via the valve arrangement.. Thus, the piston moves in one direction, whereas the damping medium flows in the opposite direction.

Thus, the present invention is based on the insight that by using a flow restriction arrangement and a valve arrangement having a valve member which is movable between a first end position and a second end position, different flow restrictions on the flow of damping medium from the actuator chamber to the pilot chamber may be obtained. The flow restriction arrangement is provided with at least two flow restrictions having different flow restriction areas. These different flow restrictions with different restriction areas are arranged, with regard to relative position, such that at least two flow paths with different restrictions is obtained in order to provide different flow restrictions on the flow from the actuator chamber to the pilot chamber which are dependent on the stroke, i.e. the first stroke or second stroke. In other words, the different flow restrictions have different purposes. During a first stroke, the flow from the actuator chamber to the pilot chamber is restricted by a first flow restriction in order to achieve a first restriction effect. Furthermore, during a second stroke, the flow from the actuator chamber to the pilot chamber is restricted by a second flow restriction in order to achieve a second restriction effect.

As mentioned above, the valve member is arranged to be movable between two end positions. Thus, the valve member is arranged to co-operate with the restriction arrangement to obtain different flow restrictions depending on at which end position, the first or second end position, the valve member is arranged. In other words, when the valve member is at the first end position, the flow from the actuator chamber to the pilot chamber is forced through a first flow path having a predetermined flow restriction, whereas when the valve member is at the second end position, the flow from the actuator chamber to the pilot chamber is forced through a second flow path having second restriction.

Since it is possible to separate the flow restriction of the flow from the actuator chamber to the pilot chamber depending on the stroke, it is thereby possible to adapt the flow restriction of the flow path to different needs during the first stroke and the second stroke. Thus, if a plunger arrangement or an annular actuator, or another element or actuating member of the actuator, or any other part or portion of the actuator, such as a valve member or the like, is subjected to an oscillating force, or any force which could generate an oscillating or any type of movement which could have a detrimental impact on the damping characteristic, and this oscillating force and/or any other type of movement would generate an oscillating of the damping medium in the actuator chamber, then this movement could be attenuated by adapting the restriction of the flow path from the actuator chamber to the pilot chamber during, for example, the first stroke. Thereby, the flow path is provided with a first flow restriction area suitable for effectively attenuating any unwanted movement of damping medium in the actuator chamber. However, during the second stroke, the damping medium enters the actuator chamber, for example, from the second chamber and continues to the pilot chamber. This flow from the actuator chamber to the pilot chamber during this second stroke requires a second flow restriction area. Thus, one advantage of the present invention is thus that it provides at least a first and a second flow path from the actuator chamber to the pilot chamber which are arranged with at least a first and a second flow restriction during different strokes.

As is understood by the skilled person, the degree of restriction which is required to attenuate any unwanted movement of damping medium in the actuator chamber is determined by the actuator volume, i.e. the volume of damping medium which is accommodated by the actuator chamber.

Furthermore, it should be noted that by the terms "first stroke" and "second stroke" as used herein is intended to refer to either one a compression stroke and rebound stroke. Thus, the first stroke could be one of the compression stroke and rebound stroke. Similarly, the second stroke could be one of the compression stroke or rebound stroke. However, as envisage by the skilled person in the art, if the first stroke is the compression stroke then the second stroke is the rebound stroke and vice versa, i.e. the first stroke is a stroke in first direction whereas the second stroke is a stroke in a second direction opposite to the first direction.

According to an embodiment of the present invention the first valve member is arranged to co-operate with a channel or channel portion of said first restriction arrangement.

According to an embodiment of the present invention, the first flow path is a first channel and a second channel between the first actuator chamber and the pilot volume, and said second flow path is a second channel between the first actuator chamber and the pilot chamber, wherein said first channel and the second channel are arranged in parallel between the first actuator chamber and the pilot chamber, and wherein said first valve member is arranged to block the first channel when said first valve member is in the second end position and to unblock the first channel when said first valve member is in the first end position.

According to another embodiment of the present invention, the first valve member is movable between two channel openings defining the first and second end positions,

According to yet another embodiment of the present invention, the first valve member is a ball or a rounded element able to block the channel opening or the channel.

In a further embodiment of the present invention, the first flow restriction area is defined by a first channel portion and said second flow restriction area is defined by a second channel portion, wherein the first channel portion and second channel portion are arranged in series between the first actuator chamber and the pilot chamber; and wherein said first valve member is arranged to bypass the second channel portion when said first valve member is in the first end position and to force the flow of damping medium from the first actuator chamber to the pilot chamber via the second channel portion when said first valve member is in the second end position.

According to an embodiment of the invention, the first valve member comprises a flexible portion forming a channel wall portion movable between the first and the second end positions thereby varying a flow restriction area.

According to another embodiment of the invention, the first valve member is a shim or a plate-shaped element

In yet another embodiment of the present invention, the first sub valve arrangement is a first shuttle valve, wherein said first valve member abuts a first seat in its first end position, and wherein the first valve member abuts a second seat in its second end position.

In an embodiment of the present invention, said first flow restriction area is greater than the second flow restriction area.

In another embodiment of the present invention, the first actuator comprises two or more plungers being arranged to actuate on the main flow of damping medium in response to the first actuating pressure.

The ring shaped actuators used in the known art are characterized by high friction especially in the case where soft seals have been specified. If not soft seals are used, the machined parts need to have an extreme precision to avoid too much leakage. This high level of machining precision is very expensive and is also causing problems with friction and stick slip. In some cases the known art is using actuators build up by a flexible shim element or similar. These kinds of actuators will solve the problem with friction and stick slip but will on the other hand cause a huge problem with undefined pressure areas which establishes the actuator force. This in turn have the disadvantage of generating big scatter on the valve output pressure.

The advantage of using two or more plungers which are arranged to actuate on the main flow of damping medium in response to the first actuating pressure, is that each plunger is able to have perfect conditions in respective holes and will thereby give the valve member a tilting capability. Furthermore, the present design will have low controlled pressure scatter, low friction, low stick slip levels and low leakage compared with some of the known art designs. The number of plungers, their diameters, the number of combined spring rates and preloads with the tilting capability and asymmetry will create numerous of possibilities to adapt valve characteristics within the complete pressure range to meet customer demands within minor different valve types more flexible and to lower cost than compared with the some of the known art. It is a common rule to set the lowest possible guide length for a plunger, poppet or a spool at least equal to the diameter which for some known art would generate very long actuators if they would not be exposed to stick slip which means that each actuator of the present design is 6 times shorter for a single acting valve and twelve times shorter for a double acting valve.

According to yet another embodiment of the invention, the second actuator comprises an annular actuator being arranged to actuate on the main flow of damping medium in response to the second actuating pressure.

In yet another embodiment of the present invention, the first actuator comprises an annular or ring-shaped actuator body being arranged to actuate on the main flow of damping medium in response to the first actuating pressure. The ring-shaped actuator body may be guided on an inner periphery thereof by for example the actuator housing. The ring-shaped actuator body may be used together with a plate spring or a shim stack adapted to exert an opposing spring force a main valve member via the ring-shaped actuator body. The plate spring or shim stack may be arranged to provide a sealing function around an outer periphery of the actuator body. Thereby, a relatively large play may be used around said outer perihpery. In such a manner, a relatively low friction and stick slip may be achieved. The plate spring may allow the ring-shaped actuator to always be in contact with the main valve member. Unlike the embodiments where the first actuator comprises two or more plungers, using a ring-shaped actuator body may omit the need of a force transmitting ring is between the first actuator and main valve member.

In yet another embodiment of the present invention, said valve arrangement further comprises a first valve disk being interposed between the first actuator and a first seat part, wherein the first valve disk is arranged to open and close for the main flow of damping medium from the first chamber to the second chamber against the seat part.

In a further embodiment of the present invention, said valve arrangement further comprises a second actuator having a second actuator chamber communicating with said first chamber and said second chamber, said second actuator, during said second stroke, being arranged to actuate on said main flow of damping medium in response to a second actuating pressure in the second actuator chamber; a second restriction arrangement for restricting a flow of damping medium from the first actuator chamber to the pilot chamber, said restriction arrangement being arranged to provide a third flow path restricted by a third flow restriction area during a first stroke and to provide a fourth flow path restricted by a fourth flow restriction area during the second stroke; and a second sub valve arrangement comprising a second valve member, said second valve member being in a first end position during the second stroke and being in a second end position during the first stroke, wherein said second valve member is arranged to co-operate with said second restriction arrangement such that the flow of damping medium from the second actuator chamber to the pilot chamber flows via said third flow path when said second valve member is in the first end position and flows via said fourth flow path when said second valve member is in the second end position; and wherein said pilot valve is arranged to control the first actuating pressure and the second actuating pressure, and wherein said pilot chamber is in fluid communication with the first actuator chamber and the second actuator chamber.

In another embodiment of the present invention, the second valve member is arranged to co-operate with a channel or channel portion of said second restriction arrangement.

In another embodiment of the present invention, said third flow path is a first channel between the second actuator chamber and the pilot chamber, and said fourth flow path is a second channel between the second actuator chamber and the pilot chamber, wherein said first channel and the second channel are arranged in parallel, and wherein said second valve member is arranged to block the first channel when said second valve member is in the second end position, and to unblock the first channel when said second valve member is in the first end position. In other words, the third flow path is a third channel and a fourth channel between the second actuator chamber and the pilot chamber, and said fourth flow path is a fourth channel between the second actuator chamber and the pilot chamber, wherein said third channel and the fourth channel are arranged in parallel, and said second valve member is arranged to block the third channel when said second valve member is in the second end position. In yet another embodiment of the present invention, the second valve member is movable between two channel openings defining the first and second end positions,

In yet another embodiment of the present invention, the second valve member is a ball or a rounded element able to block the channel opening or the channel.

In a further embodiment of the present invention, the third flow restriction area is defined by a first channel portion and said fourth flow restriction area is defined by a second channel portion, wherein the first channel portion and second channel portion are arranged in series between the second actuator chamber and the pilot chamber; and wherein said second valve member is arranged to bypass the second channel when said second valve member is in the first end position and to force the flow of damping medium from the second actuator chamber to the pilot chamber via the second channel when said second valve member is in the second end position. In other words, the third flow restriction area is defined by a third channel portion and said fourth flow restriction area is defined by a fourth channel portion, wherein the third channel portion and fourth channel portion are arranged in series between the second actuator chamber and the pilot chamber; and the second valve member is arranged to bypass the fourth channel when said second valve member is in the first end position and to force the flow of damping medium from the second actuator chamber to the pilot chamber via the fourth channel when said second valve member is in the second end position.

In another embodiment of the present invention, the first valve member comprises a flexible portion forming a channel wall portion movable between the first and the second end positions thereby varying a flow restriction area.

In another embodiment of the present invention, the first valve member is a shim or a plate-shaped element

In yet another embodiment of the present invention, the second sub valve arrangement is a second shuttle valve, wherein said second valve member abuts a third seat in its first end position, and wherein the second valve member abuts a fourth seat in its second end position.

According to another embodiment of the present invention, said third flow restriction area is greater than the fourth flow restriction area.

In an embodiment of the present invention, the second actuator comprises two or more plungers being arranged to actuate on the main flow of damping medium in response to the second actuating pressure.

In yet another embodiment of the present invention, said valve arrangement further comprising a second valve disk being interposed between the second actuator and a second seat part, wherein the second valve disk is arranged to open and close for the main flow of damping medium from the second chamber to the first chamber against the seat part.

According to another embodiment of the present invention, the second actuator comprises an annular actuator being arranged to actuate on the main flow of damping medium in response to the second actuating pressure.

In yet another embodiment of the present invention, the second actuator comprises an annular or ring-shaped actuator body being arranged to actuate on the main flow of damping medium in response to the second actuating pressure. The ring-shaped actuator body may be guided on an inner periphery thereof by for example the actuator housing. The ring-shaped actuator body may be used together with a plate spring or a shim stack adapted to exert an opposing spring force a main valve member via the ring-shaped actuator body. The plate spring or shim stack may be arranged to provide a sealing function around an outer periphery of the actuator body. Thereby, a relatively large play may be used around said outer perihpery. In such a manner, a relatively low friction and stick slip may be achieved. The plate spring may allow the ring-shaped actuator to always be in contact with the main valve member. Unlike the embodiments where the second actuator comprises two or more plungers, using a ring-shaped actuator body may omit the need of a force transmitting ring is between the second actuator and main valve member.

In a further embodiment of the present invention, the first stroke is one of a compression stroke and a rebound stroke of the shock absorber, and the second stroke is the other of the compression stroke and the rebound stroke.

In a further embodiment of the present invention, said two or more plungers are arranged to exert a actuator force on said valve disk in response to a pilot pressure (pp), wherein said actuator force may be varied by varying at least one the following:
- a diameter size or of the plungers plunger, and
- the number of plungers, thereby friction, stick slip and leakage can be held within acceptable levels.

In a further embodiment of the present invention, said two or more plungers are arranged to be, relative to each other, individually movable in order to generate an actuator force to tilt said valve disk such that a tilting movement of the valve disc may be achieved such that friction and stick slip can be held within low levels.

In a further embodiment of the present invention, said first and/or second actuator further comprises springs which are arranged with different preload and spring rates in order to provide a spring force action such that the valve member is controllable in a plurality of ways to obtain a plurality of different tilting patterns which will increase the freedom of selectable valve characteristics at low or zero pilot pressures.

In a further embodiment of the present invention, the valve arrangement is provided with a piston rod including a solenoid, a pilot valve with controllable pilotpressure pp and a piston dividing a shock absorber into a first and asecond chamber. The valve arrangement further comprises at least one disk or a shims arrangment which are actuated on by at least one actuator. Alternatively, the valve arrangement may be provided with two actuators arrnaged on either side of the piston.

The actuator is provided by a plurality of plungers, minimum 2 up to 13, which are arranged circulary around the valve centre and guided in a plunger house. The plungers are affected by a pilot pressure pp in such a way that the pressure force on each plunger is generating an added actuator force Fp which can span widely depending on the selected plunger diameter sizes, numbers of plungers. Thereby, the friction, stick slip and leakage can be held within low levels.

Alternatively, the plungers can move individually in such a way that the valve member can move freely for example with a tilting movement so that the friction and stick slip can be held within low levels. In another alternative, the plungers can be equipped and affected by springs with differnt preload and spring rates which makes the spring force action control the valve member in a plurality of ways giving the valve a plurality of different tilting patterns which will increase the freedom of selectable valve characteristics at low or zero pilot pressures

### Brief description of the drawings

Further details and aspect of the present invention will become apparent from the following detailed description with reference to accompanying drawings, in which:
Fig. 1 is a schematic illustration of a known variant of simple pressure regulator,
Fig. 2 is a cross-sectional schematic view of a dual-action and pilot controlled shock absorber valve according to an embodiment of the present invention,
Fig. 3a-b are cross-sectional schematic views of an alternative embodiment of the present invention,
Fig. 4a-d are schematic diagrams of a dual-action and pilot controlled shock absorber valve according to an embodiment of the present invention
Fig. 4e-f are schematic diagrams of known dual-action and pilot controlled shock absorber valve,
Fig. 5a-b are cross-sectional schematic views of another alternative embodiment of the present invention,
Fig. 6a-b are cross-sectional schematic views of yet another alternative embodiment of the present invention.

### Detailed description of embodiments

The present invention will now further be described in connection with the accompanying drawings. It should be noted that even though a valve arrangement with an electronically controlled pilot valve will be described and illustrated, the present invention is also applicable to valve arrangements with pilot valves that are not electronically controlled. Furthermore, it should also be noted that even though a dual-action valve arrangement will be described and illustrated, the present invention is also applicable to valve arrangements arranged to only act with one of the compression stroke and rebound stroke.

An electronically controlled pilot valve is controlled by a control device having processing capabilities via a control signal from the control device. The control device takes into account vehicle parameters, such as the speed of the vehicle and angle of the steering element. These parameters affect the control signal which, in turn affects the parameter of the pilot valve and the damping characteristics of the shock absorber.

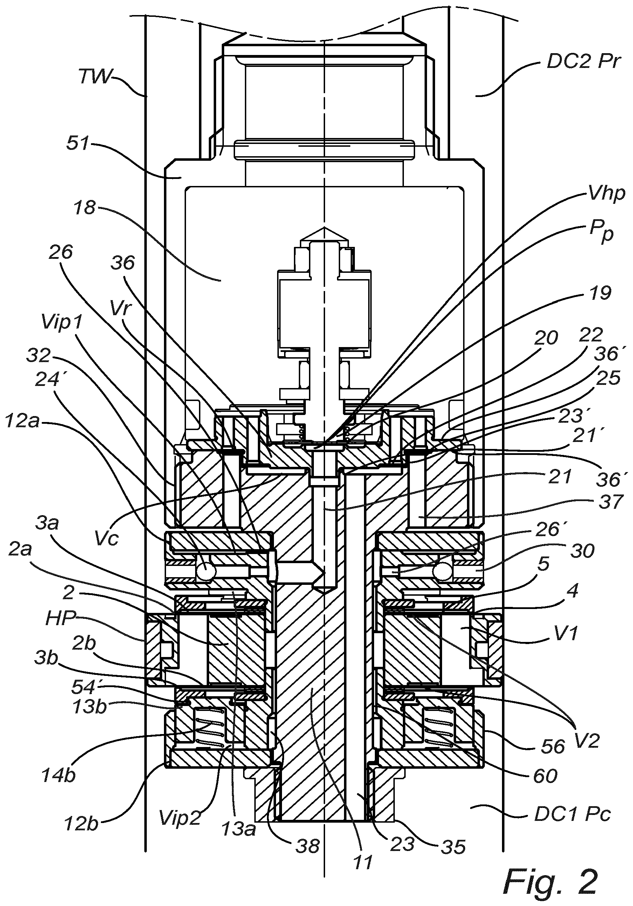

With reference to Fig 2, a dual-action valve arrangement in a pilot controlled shock absorber is shown. A main piston 2 partitions the damping cylinder of the shock absorber into a second chamber DC1 Pc and a first chamber DC2 Pr. In this case, the second chamber DC1 Pc is the compression chamber and the first chamber DC2 Pr is the rebound chamber. The main piston 2 is secured to a piston rod. The movement of the main piston 2 in the tube wall TW of the damping cylinder creates a flow of damping medium between the respective damping chambers via a shock absorber valve, i.e. a valve arrangement, which is integrated with the piston 2.

In the embodiment shown in Fig. 2, the shock absorber valve is arranged in the main piston. However, it is understood that the shock absorber valve may be arranged in a separate space interconnected with the damping chambers DC1 Pc and DC2 Pr. The hydraulic damping medium provided in the damping cylinder is pressurized with a gas pressure Pg to reduce the risk of cavitation in the damping medium, i.e. a high cavitation pressure.

In Fig. 2, the pressure regulator has plurality of seat parts on either side of the main piston 2, wherein the seat part is a portion of the main piston 2. On either side of the main piston 2, a first main valve member 3b and a second main valve member 3a is provided. The first main valve member 3b and the second main valve member 3a is arranged to co-operate with the plurality of seat parts in order to obtain a valve function. In other words, the main valve members 3a and 3b interacts with the seat parts to obtain a valve function.

Furthermore, on either side of the piston 2, a plurality of plungers 13a and 13b is arranged, which exerts an opposing force against the main valve members 3a and 3b. In other words, the plungers or actuators are arranged to exert an actuating force on the main valve members 3a and 3b. The plunger is hollow to allow a spring 14a, 14b therein. In other words, the plunger has an inner surface which defines a compartment in which a spring is arranged. Also, together with a plurality of wall portions of the shock absorber valve, the inner surface of the plunger defines an actuating volume arranged to be filled with damping medium which is in fluid communication with a pilot volume of the pilot valve.

Thus, the inner surface of the plurality of plungers are subjected to a pilot pressure force Fp, i.e. the actuating force, on the first main valve member 3a and the second main valve member 3b. The pilot pressure force is generated due to the pressurized damping medium within the actuating volume which acts on the inner surface of the plunger. The pressurized damping medium is pressurized to a pilot pressure. As mentioned above, each of the plurality of plungers 13a, 13b also provide support for at least one spring 14b, which, via the plunger body, exerts an opposing spring force Ff on the main valve members 3a and 3b. Thus, the inner surface of the plurality of plungers is subjected to a total opposing force Fa that together with flow forces, other spring forces from for example deflected shims valve members, frictions forces consisting of the pilot pressure force Fp and the spring force Ff. This total opposing force is exerted on the main valve members 3a and 3b and is balanced by a counteracting a regulating force Fr that is created by the flow of damping medium through the seat part, operating as described above.

The working range for the pressure regulator, i.e. the difference between highest and lowest pressure, is determined by the diameter and the number of plungers 13a, 13b which can be used for the particular application. The shape of the part of the plungers 13a, 13b facing the main valve member is significant for how the opening movement of the main valve member 3 occurs in relation to the seat part.

The number of plungers 13a, 13b can also be different at the compression side and the rebound side of the seat part in order to provide an individual action characteristic depending on the compression stroke and the rebound stroke. In other words, the pressure level during the rebound stroke R is greater than during the compression stroke C, or vice versa depending on the application. In addition, the plungers may be arranged asymmetrically to create both highest and lowest pressure levels and corresponding characters depending on the application. Furthermore, the springs 14a, 14b inside symmetrically placed plungers 13a, 13b can also be arranged asymmetrically in terms of preload and spring constant. Each of the springs 14a, 14b can thus have a different preload and spring constant. The number of plungers and their diameters can also be used in order to adapt the size of the pressure level/working region.

The shuttle valve at the intake of fluid to the pilot system arranged on the upstream side in the flow direction of the valve when passing the inlet to the shuttle valve is not subjected to any significant pressure drop which means that the pressure on the inside of the plungers Vip1 or Vip2, i.e. the pressure in the actuator chamber, and the pressure on the outside of the plungers, i.e. the pressure in the chamber DC1 Pc or DC 2 Pr, are essentially the same. Since the plunger on the inactive side is not subjected to any significant damping medium forces, i.e. resulting forces due to pressurized damping medium, the spring force ensures the plungers always to be in contact with their respective main valve member, which is one reasons of including such springs at that location.

Furthermore, instead of making the actuator ring shaped as in the referred known art, the actuator in hand is build up by two or more plungers 13 which are well fitted in the plunger house 56 in order to be able to slide with low leakage and friction. The plungers in question preferable have the same diameter and are equally distributed at a suiting house diametrically pitch, the added surface Ap of each plunger meeting the fluid inside the circular chambers Vip. Multiplying the pilot pressure pp with the area Ap is giving the pilot pressure force Fp which is the current controlled part of the added forces Fa biasing the regulator force Fr. Each plunger is acting with its distributed force direct on a disc shaped main valve member 3 or indirect on a shim package 3' via a force transmitting ring 54'. The plungers can move individually which permits the disc/shim package/ring, i.e. the main valve member,to move with an angle or parallel to the seat without causing an increase in the friction forces. This is an advantage because low hysteresis and stick slip can be maintained. The plungers can be permitted to have different diameters and/or be uneven distributed in order to control the movement in different tilting patterns which will increase the freedom of selectable valve characteristics. Preferable inside each plunger there is a spring 14 which is making the plunger always being in contact with the main valve member 3 or the ring 54 and in the case the main valve member 3 is a shim package, the spring force consist of the bending in the spring package itself as well. The intake of fluid to the pilot system arranged on the upstream side in the flow direction of the valve when passing the inlet to the shuttle valve is not subjected to any significant pressure drop which means that the plungers inside this chambers Vip are subjected to the same pressure on both their circular inner and outer sides. This ensures the plungers always to be in contact with their respective main valve member which is one of the reasons for the springs. The force transmitting ring 54 which preferable is guided by the plungers on the shoulder 54' has the aim to distribute the pilot pressure forces on the shim package because it is by nature to weak to handle the force from each plunger without harmful deflection. Since each spring inside the plungers are forcing its plunger individually different combinations of preloads and spring rates are possible which in turn can create the opportunity to different tilting patterns which will increase the freedom of selectable valve characteristics at low or zero pilot pressures as well.

Fig. 2 shows a valve arrangement for controlling a main flow of damping medium in a shock absorber from a first chamber DC2 Pr, in this case a rebound chamber, to a second chamber DC1 Pc, in this case a compression chamber, during a first stroke and from the second chamber to the first chamber during a second stroke. A first actuator has a first actuator chamber Vip2 which communicates with the first chamber DC2 Pr and the second chamber DC1 Pc. The first actuator, during said first stroke, is arranged to actuate on said main flow of damping medium in response to a first actuating pressure in the first actuator chamber Vip2. A pilot valve is arranged to control the first actuating pressure, wherein the pilot valve has a pilot chamber 21 which is in fluid communication with the first actuator chamber. A first restriction arrangement is shown for restricting a flow of damping medium from the first actuator chamber to the pilot chamber, wherein said first restriction arrangement is arranged to provide a first flow path which is restricted by a first flow restriction area during a first stroke. Thus, the first flow path is provided with the first flow restriction area. The first restriction arrangement is further arranged to provide a second flow path restricted by a second flow restriction area during the second stroke. Thus, the second flow path is provided with the second flow restriction area.

The first restriction arrangement further comprises a first sub valve arrangement comprising a first valve member (not shown but corresponds to the second valve member 24' in the second restriction arrangement, i.e. the upper restriction arrangement), wherein said first valve member is in a first end position during the first stroke. Thus, the actuator chamber is not in fluid communication the second chamber DC1 Pc.

The first valve member is arranged to co-operate with said first restriction arrangement such that the flow of damping medium from the first actuator chamber Vip2 to the pilot chamber 21 flows via said first flow path when said first valve member is in the first end position. The first valve member co-operates with the first restriction arrangement by unblocking the first channel (not shown but corresponds to the third channel, denoted 26', in the second restriction arrangement, i.e. the upper restriction arrangement) when the first valve member is in the first end position, i.e. during the first stroke, thereby allowing a flow of damping medium to flow between the first actuator chamber Vip2 and the pilot chamber 21 via the first channel and the second channel (not shown but corresponds to the fourth channel, denoted 26, in the second restriction arrangement, i.e. the upper restriction arrangement) in parallel between the first actuator chamber Vip2 and the pilot chamber. The first flow path thus comprises or is formed by the first channel and the second channel in parallel. Because the flow restriction area of the first channel is substantially larger or greater than the flow restriction area of the second channel, the flow through the first channel will dominate, i.e. the flow through the second channel will be negligible in comparison with the flow through the first channel. The first flow restriction area can thus be approximated by the flow restriction area of the first channel. In other words, the flow of damping medium from the first actuator chamber to the pilot chamber flows via said first flow path. Furthermore, the first valve member blocks a flow passage (not shown, but corresponds to the flow passage denoted 30 in the second restriction arrangement) between the second chamber DC1 Pc and the first actuator chamber Vip2 when it is in the first end position.

The first valve member is further arranged to co-operate with said first restriction arrangement such that the flow of damping medium from the first actuator chamber Vip2 to the pilot chamber 21 flows via said second flow path when said first valve member is in the second end position. When the first valve member is in the second end position, i.e. during the second stroke, the first valve member blocks the first channel, thereby allowing a flow of damping medium to flow between the first actuator chamber Vip2 and the pilot chamber 21 via the second channel only. Because the flow restriction area of the second channel is substantially smaller than the flow restriction area of the first channel, the flow is more strongly restricted compared to when the first valve member is in the first end position. The second flow path thus comprises or is formed by the second channel. The second flow restriction area is thus equal to the flow restriction area of the second channel. Furthermore, the first valve member unblocks the flow passage between the second chamber DC1 Pc and the first actuator chamber Vip2 when it is in the second end position.

Moreover, a second actuator, the upper actuator, having a second actuator chamber is shown which is able to communicate with said first chamber DC2 Pr and said second chamber DC1 Pc. Furthermore, said second actuator, during said second stroke, is arranged to actuate on said main flow of damping medium in response to a second actuating pressure in the second actuator chamber. Fig. 2 further shows a second restriction arrangement for restricting a flow of damping medium from the first actuator chamber to the pilot chamber, wherein said restriction arrangement is arranged to provide a third flow path restricted by a third flow restriction area during a first stroke and to provide a fourth flow path restricted by a fourth flow restriction area during the second stroke. Furthermore, a second sub valve arrangement is shown which comprises a second valve member 24', wherein said second valve member 24' is in a second end position during the first stroke. The second valve member 24' is in a first end position during the second stroke. Due to the pressure in the first chamber DC2 Pr, the second valve member 24' is forced into its first end position. Oppositely, during a second stroke the second valve member 24' is forced into its second end position due to the pressure in the second chamber DC1 Pc. In Fig. 2 the valve member is ball shaped, i.e. the valve member is a ball body. The second valve member 24' is arranged to co-operate with said second restriction arrangement such that the flow of damping medium from the second actuator chamber Vip1 to the pilot chamber 21 flows via said third flow path when said second valve member is in the first end position. The second valve member 24' co-operates with the second restriction arrangement by unblocking the third channel 26' when the second valve member is in the first end position, i.e. during the second stroke, thereby allowing a flow of damping medium to flow between the second actuator chamber Vip1 and the pilot chamber 21 via the third channel 26' and the fourth channel 26 in parallel. Because the flow restriction area of the third channel is substantially larger than the flow restriction area of the fourth channel, the flow through the third channel will dominate, i.e. the flow through the fourth channel will be negligible in comparison with the flow through the third channel.. The third flow path thus comprises or is formed by the third channel and the fourth channel in parallel. The third flow restriction area can thus be approximated by the flow restriction area of the third channel. In other words, the flow of damping medium from the second actuator chamber to the pilot chamber flows via said third flow path. Furthermore, the second valve member blocks a flow passage 30 between the first chamber DC2 Pr and the second actuator chamber Vip1 when it is in the first end position.

The second valve member 24' is further arranged to co-operate with said second restriction arrangement such that the flow of damping medium from the second actuator chamber Vip1 to the pilot chamber 21 flows via said fourth flow path when said second valve member is in the second end position. In Fig. 2 the second valve member is in the second end position. The second valve member co-operates with the second restriction arrangement by blocking the third channel 26' when the second valve member is in the second end position, i.e. during the first stroke, thereby allowing a flow of damping medium to flow between the second actuator chamber Vip1 and the pilot chamber 21 via the fourth channel 26 only. Because the flow restriction area of the fourth channel is substantially smaller than the flow restriction area of the third channel, the flow is more strongly restricted compared to when the second valve member is in the first end position. The fourth flow path thus comprises or is formed by the fourth channel. The fourth flow restriction area is thus equal to the flow restriction area of the fourth channel. Furthermore, the second valve member unblocks the flow passage 30 between the first chamber DC2 Pr and the second actuator chamber Vip1 when it is in the second end position.

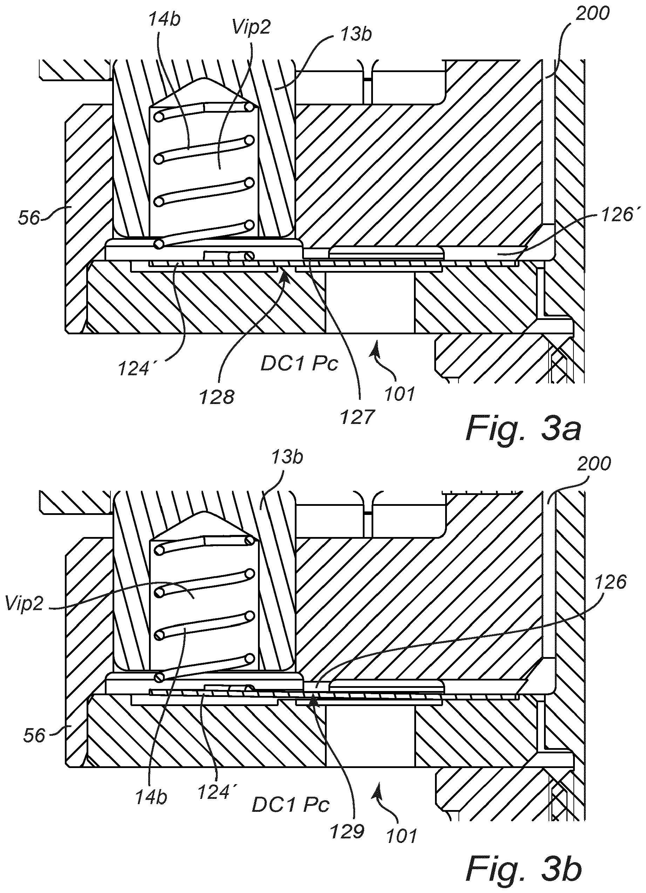

In Fig. 3a and 3b, cross-sectional schematic views of an alternative embodiment of the present invention are shown. The plunger 13b is arranged in the plunger housing 56. Inside the hollow of the plunger the spring 14 b is arranged which is adapted to exert an opposing spring force Ff on the valve member 3b (not shown) via the plunger body. The inner surface of the hollow part of the plunger together with an inner surface of the plunger housing 56 defines a plunger chamber. The plunger chambers together with the other plunger chambers on either side of the piston forms part of the actuator chamber. Thus, the plunger chambers of the first actuator forms a part of the first actuator chamber and the plunger chambers of the second actuator forms a part of the second actuator chamber. A first channel portion 126'and a second channel portion 126 are arranged in series such that a flow from the first actuator chamber to the pilot chamber first flows through the second channel portion 126 and thereafter the first channel portion 126'. Thus, the flow of damping medium flows from the first actuator chamber via the first channel portion and the second channel portion to a pilot chamber portion 200 which is in fluid communication with the pilot chamber. However, which will be described below, during the first stroke the second channel portion 126 is bypassed such that the flow is unrestricted when it passes the second channel portion, i.e. the flow unrestrictedly passes the second channel. The second channel portion 126 comprises at least one groove, slot or slit in the second seat 129. When the first valve member 124' is in the first end position, as show in fig. 3a, the first valve member is not in abutment with the second seat 129, and the groove, slot or slit in the second seat is open, i.e. not enclosed by the first valve member, towards the bypassing channel portion 127. When the first valve member 124' is in the second end position however, as show in fig. 3b, the first valve member is in abutment with the second seat, thereby forming a wall of the channel portion 126, i.e. the first valve member closes or encloses the groove, slot or slit in the second seat 129, thereby the flow from the first actuator chamber to the pilot chamber is forced there through. When the first valve member 124' is in the first end position, the bypassing channel portion 127 is formed or defined between the second seat 129 (including the groove, slot or slit) and the first valve member 124'. It is understood that the bypassing channel portion is annular, i.e. it is formed or defined around the circumference of the second seat 129. Thereby, the flow restriction area of the bypassing portion is substantially larger than that of the second channel portion 126, thereby bypassing the second channel portion. It is also understood that the flow restriction area of the bypassing portion is substantially larger than that of the first channel portion 126' such that the flow from the first actuator chamber to the pilot chamber is restricted by the first channel portion when the first valve member is in the first end position.

In Fig. 3a, a first sub valve arrangement comprising a first valve member 124' is shown, wherein the first valve member is in a first end position. When the first valve member 124' is in the first end position during the first stroke, the first valve member 124' abuts a seat 128 of the first sub-valve arrangement which thereby closes the first actuator chamber against the second chamber DC1 Pc. Thus, when the first valve member 124' is in the first end position the first actuator chamber is in fluid communication with the first chamber. In this case, the first valve member 124' co-operates with the first sub valve arrangement to provide a bypassing channel portion 127 in parallel with the second channel portion 126 such that the flow is able to pass from the first actuator chamber to the first channel portion without restricting the flow, at least in relation to the flow restriction of the first channel portion. Thus, when the first valve member 124' is in the first end position, the first valve member 124' together with a surface of the first restriction arrangement forms the bypassing channel portion 127. In other words, the bypassing channel portion provides a substantially larger flow restriction area than the second flow restriction area of the second channel portion such that the flow through the second channel portion is negligible in comparison with the flow through the bypassing channel portion. Thereby the second channel portion is effectively bypassed, i.e. the overall restriction of the flow is not limited by the second flow restriction area. The flow restriction area of the bypassing channel portion is furthermore greater than the first flow restriction area of the first channel portion, such that the overall restriction of the flow from the first actuator chamber Vip 22 to the pilot chamber is restricted by the first channel portion. Put differently, the second channel portion 126 together with the bypassing channel portion 127 constitutes a variable channel portion which, when the first valve member 124' is in the first end position, has a flow restriction area corresponding to that of the bypassing channel portion. In the other case, when the first valve member 124' is in the second end position, the variable channel has a flow area, i.e. a cross-sectional area, which equals the second flow restriction area which is restrictive in relation to the flow restriction area of the first channel portion.

The first channel portion has a first flow restriction area and the second channel portion has a second flow restriction area. Thus, when the first valve member 124' is in the first end position, the flow of damping medium from the first actuator chamber to the pilot chamber is a first flow path which has a first flow restriction since the restriction of the flow is determined by the flow restriction area of the first channel portion, i.e. first flow restriction area.

In Fig. 3b, the first valve member 124' is in a second end position during the second stroke. When the first valve member 124' is in the second end position, the first valve member 124' abuts a second seat 129 of the first sub-valve arrangement and is released from the first seat 128 of the first sub-valve arrangement. Thereby the bypassing channel portion is closed and a flow passage from the first actuator chamber to the second chamber DC1 Pc is opened between the first valve member 124' and the first seat 128. Thus, when the first valve member 124' is in the second end position, the first actuator chamber Vip 2 is in fluid communication with the second chamber DC1 Pc. The flow of damping medium from the first actuator chamber to the pilot chamber is a second flow path which has a second flow restriction since the restriction of the flow is determined by the flow restriction area of the second channel portion, i.e. the second flow restriction area.

As mentioned above, when the first valve member 124' is in the first end position, the first valve member is arranged to bypass the second channel. The flow is thus restricted by the first restriction area of the first channel portion 126'. When the first valve member 124' is in the second end position, the flow of damping medium from the first actuator chamber is forced through the second channel portion and thereafter to the pilot chamber via the first channel portion.

It is understood that a corresponding arrangement as illustrated in fig. 3a and 3b and described above may be used in the other flow direction analogously with fig. 2. In another embodiment, an arrangement as illustrated in fig. 3a and 3b and described above may be used in one flow direction, i.e. for restricting a flow from a first actuator chamber to the pilot chamber, and a fixed restriction arrangement may be used for in the other flow direction, i.e. for restricting a flow from a second actuator chamber to the pilot chamber.

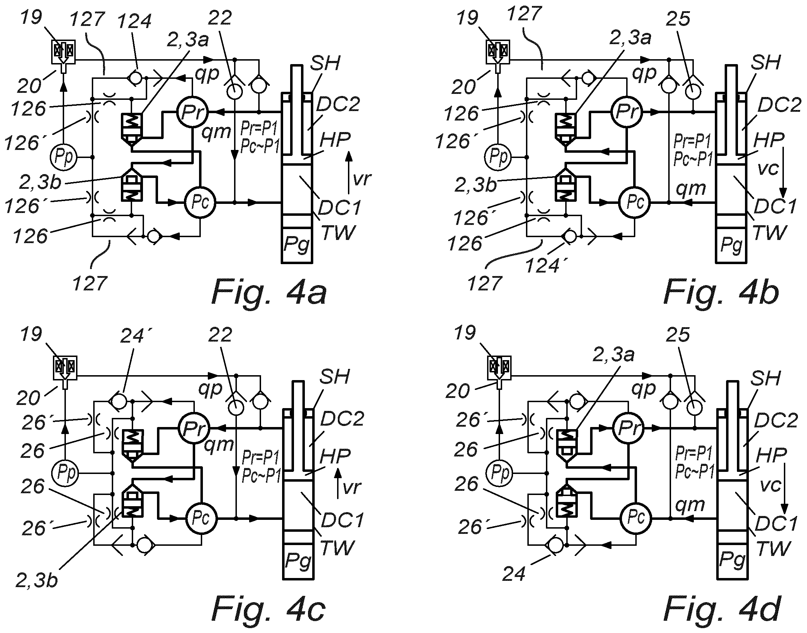

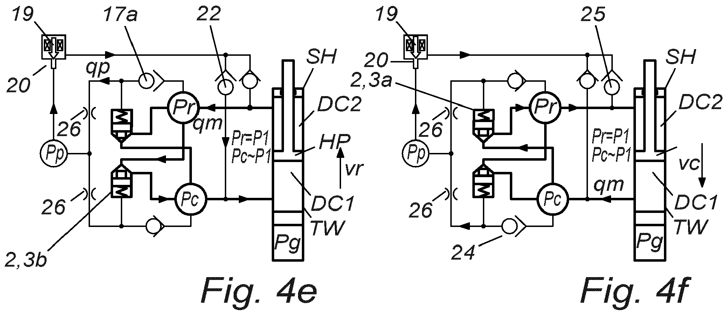

In Fig. 4a-d, schematic diagrams of a dual-action and pilot controlled shock absorber valve according to an embodiment of the present invention is shown. In fig. 4a and 4b, the flow restriction areas 126 and 126' are arranged in series in accordance with the embodiment shown in Fig. 3a-b. In Fig. 4c-d the flow restriction areas 26 and 26' are arranged in parallel in accordance with the embodiment shown in Fig. 2.

In Fig. 4e-f, schematic diagrams of known dual-action and pilot controlled shock absorber valve are shown.

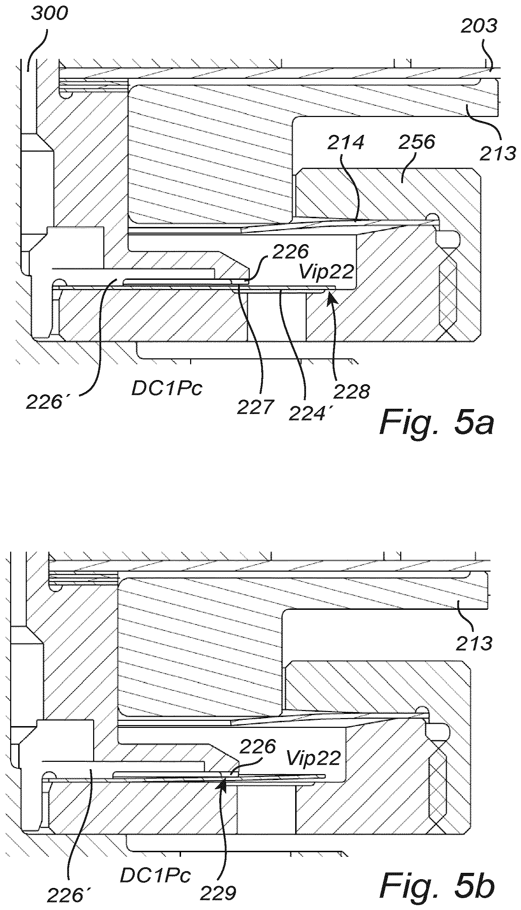

In Fig. 5a and 5b, cross-sectional schematic views of another alternative embodiment of the present invention are shown. Instead of using plungers to actuate on said main flow of damping medium in response to a first actuating pressure (as shown in fig. 2 and 3a-b), a single ring-shaped actuator is used to actuate on the main flow in each direction. In fig. 5a and 5b, a first ring-shaped actuator 213 is shown. The ring-shaped actuator is arranged in the actuator housing 256. A plate spring 214 is attached to the actuator housing 256 along its outer circumference, and is adapted to exert an opposing spring force on the main valve member 203 via the first ring-shaped actuator 213. The plate spring 214 allows the ring-shaped actuator 213 to always be in contact with the main valve member 203. Note that unlike the embodiments shown in fig. 2 and 3, no force transmitting ring is used between the actuator and main valve member. The bottom surface of the first ring-shaped actuator 213 together with inner surfaces of the actuator housing 256 defines a first actuator chamber Vip 22. A first channel portion 226'and a second channel portion 226 are arranged in series such that a flow from the first actuator chamber to the pilot chamber first flows through the second channel portion 226 and thereafter the first channel portion 226'. Thus, the flow of damping medium flows from the first actuator chamber via the first channel portion and the second channel portion to a pilot chamber portion 300 which is in fluid communication with the pilot chamber. However, which will be described below, during the first stroke the second channel portion 226 is bypassed such that the flow is unrestricted when it passes the second channel portion, i.e. the flow unrestrictedly passes the second channel. The second channel portion 226 comprises at least one groove, slot or slit in the second seat 229. When the first valve member 224' is in the first end position, as show in fig. 5a, the first valve member is not in abutment with the second seat 229, and the groove, slot or slit in the second seat is open, i.e. not enclosed by the first valve member, towards the bypassing channel portion 227. When the first valve member 224' is in the second end position however, as show in fig. 5b, the first valve member is in abutment with the second seat, thereby forming a wall of the channel portion 226, i.e. the first valve member closes or encloses the groove, slot or slit in the second seat 229, thereby the flow from the first actuator chamber to the pilot chamber is forced there through. When the first valve member 224' is in the first end position, the bypassing channel portion 227 is formed or defined between the second seat 229 (including the groove, slot or slit) and the first valve member 224'. It is understood that the bypassing channel portion is annular, i.e. it is formed or defined around the circumference of the second seat 229. Thereby, the flow restriction area of the bypassing portion is substantially larger than that of the second channel portion 226, thereby bypassing the second channel portion. It is also understood that the flow restriction area of the bypassing portion is substantially larger than that of the first channel portion 226' such that the flow from the first actuator chamber to the pilot chamber is restricted by the first channel portion when the first valve member is in the first end position.

In Fig. 5a, a first sub valve arrangement comprising a first valve member 224' is shown, wherein the first valve member is in a first end position. When the first valve member 224' is in the first end position during the first stroke, the first valve member 224' abuts a first seat 228 of the first sub-valve arrangement which thereby closes the first actuator chamber against the second chamber DC1 Pc. In this case, the first valve member 224' co-operates with the first sub valve arrangement to provide a bypassing channel portion 227 in parallel with the second channel portion 226 such that the flow is able to pass from the first actuator chamber to the first channel portion without restricting the flow, at least in relation to the flow restriction of the first channel portion. Thus, when the first valve member 224' is in the first end position, the first valve member 224' together with a surface of the first restriction arrangement forms the bypassing channel portion 227. The bypassing channel portion provides a substantially larger flow restriction area than the second flow restriction area of the second channel portion such that the flow through the second channel portion is negligible in comparison with the flow through the bypassing channel portion. Thereby the second channel portion is effectively bypassed, i.e. the overall restriction of the flow is not limited by the second flow restriction area. The flow restriction area of the bypassing channel portion is furthermore greater than the first flow restriction area of the first channel portion, such that the overall restriction of the flow from the first actuator chamber Vip 22 to the pilot chamber is restricted by the first channel portion. Put differently, the second channel portion 226 together with the bypassing channel portion 227 constitutes a variable channel portion which, when the first valve member 224' is in the first end position, has a flow restriction area corresponding to that of the bypassing channel portion. In the other case, when the first valve member 224' is in the second end position, the variable channel has a flow area, i.e. a cross-sectional area, which equals the second flow restriction area which is restrictive in relation to the flow restriction area of the first channel portion. The first channel portion has a first flow restriction area and the second channel portion has a second flow restriction area. Thus, when the first valve member 224' is in the first end position, the flow of damping medium from the first actuator chamber to the pilot chamber is a first flow path which has a first flow restriction since the restriction of the flow is determined by the flow restriction area of the first channel portion, i.e. first flow restriction area.

In Fig. 5b, the first valve member 224' is in a second end position. When the first valve member 224' is in the second end position during the second stroke, the first valve member 224' abuts a second seat 229 of the first sub-valve arrangement and is released from the first seat 228 of the first sub-valve arrangement. Thereby the bypassing channel portion is closed and a flow passage from the first actuator chamber to the second chamber DC1 Pc is opened between the first valve member 224' and the first seat 228. Thus, when the first valve member 224' is in the second end position, the first actuator chamber Vip 22 is in fluid communication with the second chamber DC1 Pc. The flow of damping medium between the first actuator chamber and the pilot chamber is a second flow path which has a second flow restriction since the restriction of the flow is determined by the flow restriction area of the second channel portion, i.e. the second flow restriction area.

As mentioned above, when the first valve member 224' is in the first end position the first valve member is arranged to bypass the second channel portion 226. The flow is thus restricted by the first restriction area of the first channel portion 226'. When the first valve member 224' is in the second end position, the flow of damping medium from the first actuator chamber is forced through the second channel portion 226 and thereafter to the pilot chamber via the first channel portion 226'.

It is understood that a corresponding arrangement as illustrated in fig. 5a and 5b and described above may be used in the other flow direction analogously with fig. 2. In another embodiment, an arrangement as illustrated in fig. 5a and 5b and described above may be used in one flow direction, i.e. for restricting a flow from a first actuator chamber to the pilot chamber, and a fixed restriction arrangement may be used for in the other flow direction, i.e. for restricting a flow from a second actuator chamber to the pilot chamber.

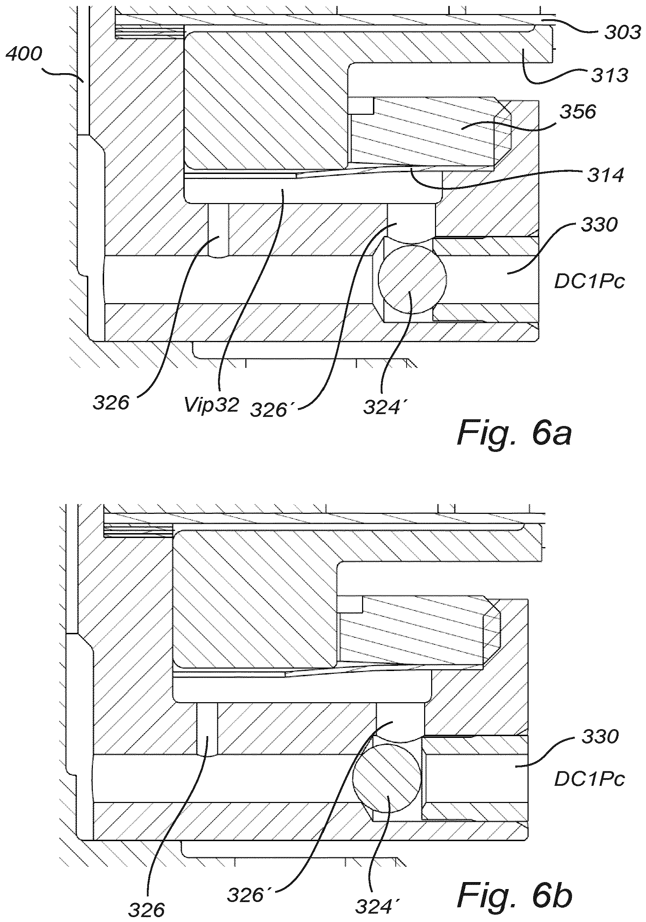

In Fig. 6a and 6b, cross-sectional schematic views of yet another alternative embodiment of the present invention are shown. Instead of using plungers to actuate on said main flow of damping medium in response to a first actuating pressure (as shown in fig. 2 and 3a-b), a single ring-shaped actuator is used to actuate on the main flow in each direction. In fig. 6a and 6b, a first ring-shaped actuator 313 is shown. The ring-shaped actuator is arranged in the actuator housing 356. A plate spring 314 is attached to the actuator housing 356 along its outer circumference, and is adapted to exert an opposing spring force on the main valve member 303 via the first ring-shaped actuator 313. The plate spring 314 allows the ring-shaped actuator 313 to always be in contact with the main valve member 303. Note that unlike the embodiments shown in fig. 2 and 3, no force transmitting ring is used between the actuator and main valve member. The bottom surface of the first ring-shaped actuator 313 together with inner surfaces of the actuator housing 356 defines a first actuator chamber Vip 32. A first restriction arrangement is shown for restricting a flow of damping medium from the first actuator chamber to a pilot chamber, wherein the first restriction arrangement is arranged to provide a first flow path which is restricted by a first flow restriction area during a first stroke. Thus, the first flow path is provided with the first flow restriction area. The first restriction arrangement is further arranged to provide a second flow path restricted by a second flow restriction area during the second stroke. Thus, the second flow path is provided with the second flow restriction area. The first restriction arrangement further comprises a first sub valve arrangement comprising a first valve member 324', wherein the first valve member is in a first end position during the first stroke. The first valve member 324' is arranged to co-operate with the first restriction arrangement such that the flow of damping medium from the first actuator chamber Vip 32 to the pilot chamber flows via the first flow path when the first valve member 324' is in the first end position. The first valve member is further arranged to co-operate with said first restriction arrangement such that the flow of damping medium from the first actuator chamber Vip32 to the pilot chamber 21 flows via said second flow path when said first valve member is in the second end position. The flow of damping medium flows from the first actuator chamber via the first or second flow paths to a pilot chamber portion 400 which is in fluid communication with the pilot chamber.

In Fig. 6a, a first sub valve arrangement comprising a first valve member 324' is shown, wherein the first valve member is in a first end position. When the first valve member 324' is in the first end position during the first stroke, the first valve member 324' abuts a first seat of the first sub-valve arrangement which thereby closes the first actuator chamber against the second chamber DC1 Pc. In this case, the first valve member co-operates with the first restriction arrangement by unblocking the first channel 326' when the first valve member is in the first end position, i.e. during the first stroke, thereby allowing a flow of damping medium to flow between the first actuator chamber Vip32 and the pilot chamber via the first channel 326' and the second channel 326 in parallel. Because the first flow restriction area is substantially larger than the second flow restriction area, the flow through the first channel will dominate, i.e. the flow through the second channel will be negligible in comparison with the flow through the first channel. The first flow path thus comprises or is formed by the first channel and the second channel in parallel. The first flow restriction area can thus be approximated by the flow restriction area of the first channel. In other words, the flow of damping medium from the first actuator chamber to the pilot chamber flows via said first flow path. Furthermore, the first valve member blocks a flow passage 330 between the second chamber DC1 Pc and the first actuator chamber Vip 32 when it is in the first end position. Thus, when the first valve member 324' is in the first end position, the first actuator chamber Vip 32 is not in fluid communication with the second chamber DC1 Pc.

In Fig. 6b, the first valve member 324' is in a second end position. When the first valve member is in the second end position, i.e. during the second stroke, the first valve member blocks the first channel 326', thereby allowing a flow of damping medium to flow between the first actuator chamber Vip2 and the pilot chamber via the second channel 326 only. Because the flow restriction area of the second channel is substantially smaller than the flow restriction area of the first channel, the flow is more strongly restricted compared to when the first valve member is in the first end position. The second flow path thus comprises or is formed by the second channel. The second flow restriction area is thus equal to the flow restriction area of the second channel. Furthermore, the first valve member unblocks the flow passage 330 between the second chamber DC1 Pc and the first actuator chamber Vip32 when it is in the second end position. Thus, when the first valve member 324' is in the second end position, the first actuator chamber Vip 32 is in fluid communication with the second chamber DC1 Pc.

As mentioned above, when the first valve member 324' is in the first end position, the first valve member is arranged to unblock the first channel 326'. The flow is thus approximately restricted by the flow restriction area of the first channel 326'. When the first valve member 324' is in the second end position, the first valve member is arranged to block the first channel 326'. The flow of damping medium from the first actuator chamber is thereby forced through the second channel 326 to the pilot chamber. The flow is thus restricted by the restriction area of the second channel 326.

It is understood that a corresponding arrangement as illustrated in fig. 6a and 6b and described above may be used in the other flow direction analogously with fig. 2. In another embodiment, an arrangement as illustrated in fig. 3a and 3b and described above may be used in one flow direction, i.e. for restricting a flow from a first actuator chamber to the pilot chamber, and a fixed restriction arrangement may be used for in the other flow direction, i.e. for restricting a flow from a second actuator chamber to the pilot chamber.

Although exemplary embodiments of the present invention have been shown and described, it will be apparent to the person skilled in the art that a number of changes and modifications, or alterations of the invention as described herein may be made. Thus, it is to be understood that the above description of the invention and the accompanying drawing is to be regarded as a non-limiting example thereof and that the scope of the invention is defined in the appended patent claims.

## Claims

1. A valve arrangement for controlling a main flow of damping medium in a shock absorber from a first chamber (DC2 Pr) to a second chamber (DC1 Pc) during a first stroke and from the second chamber to the first chamber during a second stroke, the valve arrangement comprising:
a first actuator having a first actuator chamber (Vip2) communicating with said first chamber and said second chamber, said first actuator, during said first stroke, being arranged to actuate on said main flow of damping medium in response to a first actuating pressure in the first actuator chamber;
**characterised by**
a pilot valve being arranged to control the first actuating pressure, the pilot valve having a pilot chamber (21) being in fluid communication with the first actuator chamber;
a first restriction arrangement for restricting a flow of damping medium from the first actuator chamber (Vip2) to the pilot chamber (21), said first restriction arrangement being arranged to provide a first flow path (26, 26'; 126, 127; 226, 227; 326, 326') restricted by a first flow restriction area (126, 127) during a first stroke and to provide a second flow path restricted by a second flow restriction area (26, 126, 226, 326) during the second stroke; and
a first sub valve arrangement comprising a first valve member (124', 224', 324'), said first valve member is in a first end position during the first stroke and being in a second end position during the second stroke, wherein said first valve member being arranged to co-operate with said first restriction arrangement such that the flow of damping medium from the first actuator chamber to the pilot chamber flows via said first flow path (26, 26'; 126, 127; 226, 227; 326, 326') when said first valve member is in the first end position and flows via said second flow path (26, 126, 226, 326) when said first valve member is in the second end position.

2. A valve arrangement according to claim 1, wherein the first valve member is arranged to co-operate with a channel or channel portion of said first restriction arrangement.

3. A valve arrangement according to claim 1 or 2, wherein said first flow path is a first channel (26', 326') and a second channel (26, 326) between the first actuator chamber and the pilot volume, and
said second flow path is the second channel (26, 326) between the first actuator chamber and the pilot chamber, wherein said first channel and the second channel are arranged in parallel, and wherein
said first valve member is arranged to block the first channel (26', 326') when said first valve member is in the second end position.

4. A valve arrangement according to any one of the preceding claims, wherein the first valve member is movable between two channel openings defining the first and second end positions.

5. A valve arrangement according to any one of claims 2-4, wherein the first valve member is a ball or a rounded element able to block the channel opening or the channel.

6. A valve arrangement according to claim 1 or 2, wherein the first flow restriction area is defined by a first channel portion (126', 226') and said second flow restriction area is defined by a second channel portion (126, 226), wherein the first channel portion and second channel portion are arranged in series between the first actuator chamber and the pilot chamber; and wherein
said first valve member is arranged to bypass the second channel portion (126, 226) when said first valve member is in the first end position and to force the flow of damping medium from the first actuator chamber to the pilot chamber via the second channel portion when said first valve member is in the second end position.

7. A valve arrangement according to claim 6, wherein the first valve member comprises a flexible portion forming a channel wall portion movable between the first and the second end positions thereby varying a flow restriction area.

8. A valve arrangement according to claim 6 or 7 , wherein the first valve member is a shim or a plate-shaped element.

9. A valve arrangement according to any one of the preceding claims, wherein the first sub valve arrangement is a first shuttle valve, wherein said first valve member abuts a first seat in its first end position, and wherein the first valve member abuts a second seat in its second end position.

10. A valve arrangement according to any one of the preceding claims, wherein said first flow restriction area is greater than the second flow restriction area.

11. A valve arrangement according to any one the preceding claims, said valve arrangement further comprising a first valve disk (3b) or a first main valve member (3b) being interposed between the first actuator and a first seat part, wherein the first valve disk (3b) or the first main valve member (3b) is arranged to open and close for the main flow of damping medium from the first chamber to the second chamber against the seat part.

12. A valve arrangement according to any one of the preceding claims, said valve arrangement further comprising:
a second actuator having a second actuator chamber communicating with said first chamber and said second chamber, said second actuator, during said second stroke, being arranged to actuate on said main flow of damping medium in response to a second actuating pressure in the second actuator chamber;
a second restriction arrangement for restricting a flow of damping medium from the second actuator chamber to the pilot chamber, said restriction arrangement being arranged to provide a third flow path restricted by a third flow restriction area during a first stroke and to provide a fourth flow path restricted by a fourth flow restriction area during the second stroke; and
a second sub valve arrangement comprising a second valve member (24'), said second valve member being in a first end position during the second stroke and being in a second end position during the first stroke, wherein said second valve member being arranged to co-operate with said second restriction arrangement such that the flow of damping medium from the second actuator chamber to the pilot chamber flows via said third flow path when said second valve member is in the first end position and flows via said fourth flow path when said second valve member is in the second end position; and wherein
said pilot valve is arranged to control the first actuating pressure and the second actuating pressure, and wherein said pilot chamber is in fluid communication with the first actuator chamber and the second actuator chamber.

13. A valve arrangement according to claim 12, wherein the second valve member is arranged to co-operate with a channel or channel portion of said second restriction arrangement.

14. A valve arrangement according to any one of the claims 12 or 13, wherein said third flow path is a third channel and a fourth channel between the second actuator chamber and the pilot chamber, and said fourth flow path is a fourth channel between the second actuator chamber and the pilot chamber, wherein said third channel and the fourth channel are arranged in parallel, and wherein
said second valve member is arranged to block the third channel when said second valve member is in the second end position.

15. A valve arrangement according to any one of the claims 12 to 14, wherein the second valve member is movable between two channel openings defining the first and second end positions.

16. A valve arrangement according to any one of the claims 13 to 15, wherein the second valve member is a ball or a rounded element able to block the channel opening or the channel.

17. A valve arrangement according to claim 12 or 13, wherein the third flow restriction area is defined by a third channel portion and said fourth flow restriction area is defined by a fourth channel portion, wherein the third channel portion and fourth channel portion are arranged in serie between the second actuator chamber and the pilot chamber; and wherein
said second valve member is arranged to bypass the fourth channel when said second valve member is in the first end position and to force the flow of damping medium from the second actuator chamber to the pilot chamber via the fourth channel when said second valve member is in the second end position.

18. A valve arrangement according to claim 17, wherein the first valve member comprises a flexible portion forming a channel wall portion movable between the first and the second end positions thereby varying a flow restriction area.

19. A valve arrangement according to claim 17 or 18, wherein the first valve member is a shim or a plate-shaped element.

20. A valve arrangement according to any one of claims 12 to 19, wherein the second sub valve arrangement is a second shuttle valve, and wherein said second valve member abuts a third seat in its first end position, and wherein the second valve member abuts a fourth seat in its second end position.

21. A valve arrangement according to any one of claims 12 to 20, wherein said third flow restriction area is greater than the fourth flow restriction area.

22. A valve arrangement according to any one of claims 12 to 21, wherein the second actuator comprises an annular actuator being arranged to actuate on the main flow of damping medium in response to the second actuating pressure.

23. A valve arrangement according any one of claims 12 to 22, said valve arrangement further comprising a second valve disk (3a) or a second main valve member (3a) being interposed between the second actuator and a second seat part, wherein the second valve disk (3a) or the second main valve member (3a) is arranged to open and close for the main flow of damping medium from the second chamber to the first chamber against the seat part.

24. A valve arrangement according to any one of the preceding claims, wherein the first stroke is one of a compression stroke and a rebound stroke of the shock absorber, and the second stroke is the other of the compression stroke and the rebound stroke.

## Patentansprüche

1. Ventilanordnung zum Steuern eines Hauptflusses von Dämpfungsmedium in einem Stoßdämpfer von einer ersten Kammer (DC2 Pr) zu einer zweiten Kammer (DC1 Pc) während eines ersten Hubs und von der zweiten Kammer zu der ersten Kammer während eines zweiten Hubs, wobei die Ventilanordnung Folgendes aufweist:
einen ersten Aktuator mit einer ersten Aktuatorkammer (Vip2), die mit der ersten Kammer und der zweiten Kammer in Verbindung steht, wobei der erste Aktuator während des ersten Hubs derart angeordnet ist, auf den Hauptfluss des Dämpfungsmediums in Reaktion auf einen ersten Aktuatordruck in der ersten Aktuatorkammer zu wirken;
**gekennzeichnet durch**:
ein Steuerventil, das derart angeordnet ist, den ersten Aktuatordruck zu steuern, wobei das Steuerventil eine Steuerkammer (21) aufweist, die in Verbindung mit der ersten Aktuatorkammer steht;
eine erste Drosselanordnung zum Drosseln eines Flusses von Dämpfungsmedium von der ersten Aktuatorkammer (Vip2) zu der Steuerkammer (21), wobei die erste Drosselanordnung derart angeordnet ist, einen ersten Flusspfad (26, 26'; 126, 127; 226, 227; 326, 326') bereitzustellen, der während eines ersten Hubs von einem ersten Durchflussdrosselbereich (126, 127) gedrosselt wird, und einen zweiten Flusspfad bereitzustellen, der während des zweiten Hubs von einem zweiten Durchflussdrosselbereich (26, 126, 226, 326) gedrosselt wird; und
eine erste Unterventilanordnung, die ein erstes Ventilteil (124', 224', 324") aufweist, wobei sich das erste Ventilteil während des ersten Hubs in einer ersten Endposition befindet und während des zweiten Hubs in einer zweiten Endposition befindet, wobei das erste Ventilteil dazu angeordnet ist, mit der ersten Drosselanordnung derart zusammenzuwirken, dass der Fluss von Dämpfungsmedium von der ersten Aktuatorkammer zu der Steuerkammer über den ersten Flusspfad (26, 26'; 126, 127; 226, 227; 326, 326') fließt, wenn sich das erste Ventilteil in der ersten Endposition befindet, und über den zweiten Flusspfad (26, 126, 226, 326) fließt, wenn sich das erste Ventilteil in der zweiten Endposition befindet.

2. Ventilanordnung nach Anspruch 1, wobei das erste Ventilteil dazu angeordnet ist, mit einem Kanal oder einem Kanalabschnitt der ersten Drosselanordnung zusammenzuwirken.

3. Ventilanordnung nach Anspruch 1 oder 2, wobei der erste Flusspfad ein erster Kanal (26', 326") und ein zweiter Kanal (26, 326) zwischen der ersten Aktuatorkammer und dem Steuervolumen ist, und
der zweite Flusspfad der zweite Kanal (26, 326) zwischen der ersten Aktuatorkammer und der Steuerkammer ist, wobei der erste Kanal und der zweite Kanal parallel angeordnet sind, und wobei
das erste Ventilteil derart angeordnet ist, den ersten Kanal (26', 326") zu blockieren, wenn sich das erste Ventilteil in der zweiten Endposition befindet.

4. Ventilanordnung nach einem der vorhergehenden Ansprüche, wobei das erste Ventilteil zwischen zwei Kanalöffnungen, die die erste und zweite Endposition definieren, beweglich ist.

5. Ventilanordnung nach einem der Ansprüche 2 bis 4, wobei das erste Ventilteil ein Kugel- oder ein abgerundetes Element ist, das in der Lage ist, die Kanalöffnung oder den Kanal zu blockieren.

6. Ventilanordnung nach Anspruch 1 oder 2, wobei der erste Durchflussdrosselbereich durch einen ersten Kanalabschnitt (126", 226') definiert ist und der zweite Durchflussdrosselbereich durch einen zweiten Kanalabschnitt (126, 226) definiert ist, wobei der erste Kanalabschnitt und der zweite Kanalabschnitt nacheinander zwischen der ersten Aktuatorkammer und der Steuerkammer angeordnet sind; und wobei
das erste Ventilteil derart angeordnet ist, den zweiten Kanalabschnitt (126, 226) zu umgehen, wenn sich das erste Ventilteil in der ersten Endposition befindet, und den Fluss von Dämpfungsmedium von der ersten Aktuatorkammer zu der Steuerkammer über den zweiten Kanalabschnitt zu zwingen, wenn sich das erste Ventilteil in der zweiten Endposition befindet.

7. Ventilanordnung nach Anspruch 6, wobei das erste Ventilteil einen flexiblen Abschnitt aufweist, der einen Kanalwandabschnitt bildet, der zwischen der ersten und der zweiten Endposition beweglich ist, wodurch ein Durchflussdrosselbereich variiert wird.

8. Ventilanordnung nach Anspruch 6 oder 7, wobei das erste Ventilteil ein scheiben- oder plattenförmiges Element ist.

9. Ventilanordnung nach einem der vorhergehenden Ansprüche,
wobei die erste Unterventilanordnung ein erstes Wechselventil ist, wobei das erste Ventilteil in seiner ersten Endposition an einem ersten Sitz anliegt und wobei das erste Ventilteil in seiner zweiten Endposition an einem zweiten Sitz anliegt.

10. Ventilanordnung nach einem der vorhergehenden Ansprüche, wobei der erste Durchflussdrosselbereich größer als der zweite Durchflussdrosselbereich ist.

11. Ventilanordnung nach einem der vorhergehenden Ansprüche, wobei die Ventilanordnung ferner ein erstes Ventilteller (3b) oder ein erstes Hauptventilteil (3b) aufweist, das zwischen dem ersten Aktuator und einem ersten Sitzteil angeordnet ist, wobei das erste Ventilteller (3b) oder das erste Hauptventilteil (3b) derart angeordnet ist, sich für den Hauptfluss von Dämpfungsmedium von der ersten Kammer zu der zweiten Kammer gegen das Sitzteil zu öffnen und zu schließen.

12. Ventilanordnung nach einem der vorhergehenden Ansprüche, wobei die Ventilanordnung ferner Folgendes aufweist:
einen weiten Aktuator mit einer zweiten Aktuatorkammer, die mit der ersten Kammer und der zweiten Kammer in Verbindung steht, wobei der zweite Aktuator während des zweiten Hubs derart angeordnet ist, auf den Hauptfluss des Dämpfungsmediums in Reaktion auf einen zweiten Aktuatordruck in der zweiten Aktuatorkammer zu wirken;
eine zweite Drosselanordnung zum Drosseln eines Flusses von Dämpfungsmedium von der zweiten Aktuatorkammer zu der Steuerkammer, wobei die Drosselanordnung derart angeordnet ist, einen dritten Flusspfad bereitzustellen, der während eines ersten Hubs von einem dritten Durchflussdrosselbereich gedrosselt wird, und einen vierten Flusspfad bereitzustellen, der während des zweiten Hubs von einem vierten Durchflussdrosselbereich gedrosselt wird; und
eine zweite Unterventilanordnung, die ein zweites Ventilteil (24') aufweist, wobei sich das zweite Ventilteil während des zweiten Hubs in einer ersten Endposition befindet und während des ersten Hubs in einer zweiten Endposition befindet, wobei das zweite Ventilteil dazu angeordnet ist, mit der zweiten Drosselanordnung derart zusammenzuwirken, dass der Fluss von Dämpfungsmedium von der zweiten Aktuatorkammer zu der Steuerkammer über den dritten Flusspfad fließt, wenn sich das zweite Ventilteil in der ersten Endposition befindet, und über den vierten Flusspfad fließt, wenn sich das zweite Ventilteil in der zweiten Endposition befindet; und wobei das Steuerventil derart angeordnet ist, den ersten Aktuatordruck und den zweiten Aktuatordruck zu steuern, und wobei sich das Steuerventil in Fluidverbindung mit der ersten Aktuatorkammer und der zweiten Aktuatorkammer befindet.

13. Ventilanordnung nach Anspruch 12, wobei das zweite Ventilteil dazu angeordnet ist, mit einem Kanal oder einem Kanalabschnitt der zweiten Drosselanordnung zusammenzuwirken.

14. Ventilanordnung nach einem der Ansprüche 12 oder 13, wobei der dritte Flusspfad ein dritter Kanal und ein vierter Kanal zwischen der zweiten Aktuatorkammer und der Steuerkammer ist, und der vierte Flusspfad ein vierter Kanal zwischen der zweiten Aktuatorkammer und der Steuerkammer ist,
wobei der dritte Kanal und der vierte Kanal parallel angeordnet sind, und wobei
das zweite Ventilteil derart angeordnet ist, den dritten Kanal zu blockieren, wenn sich das zweite Ventilteil in der zweiten Endposition befindet.

15. Ventilanordnung nach einem der Ansprüche 12 bis 14, wobei das zweite Ventilteil zwischen zwei Kanalöffnungen, die die erste und zweite Endposition definieren, beweglich ist.

16. Ventilanordnung nach einem der Ansprüche 13 bis 15, wobei das zweite Ventilteil ein Kugel- oder ein abgerundetes Element ist, das in der Lage ist, die Kanalöffnung oder den Kanal zu blockieren.

17. Ventilanordnung nach Anspruch 12 oder 13, wobei der dritte Durchflussdrosselbereich durch einen dritten Kanalabschnitt definiert ist und der vierte Durchflussdrosselbereich durch einen vierten Kanalabschnitt definiert ist, wobei der dritte Kanalabschnitt und der vierte Kanalabschnitt nacheinander zwischen der zweiten Aktuatorkammer und der Steuerkammer angeordnet sind; und wobei
das zweite Ventilteil derart angeordnet ist, den vierten Kanalabschnitt zu umgehen, wenn sich das zweite Ventilteil in der ersten Endposition befindet, und den Fluss von Dämpfungsmedium von der zweiten Aktuatorkammer zu der Steuerkammer über den vierten Kanalabschnitt zu zwingen, wenn sich das zweite Ventilteil in der zweiten Endposition befindet.

18. Ventilanordnung nach Anspruch 17, wobei das erste Ventilteil einen flexiblen Abschnitt aufweist, der einen Kanalwandabschnitt bildet, der zwischen der ersten und der zweiten Endposition beweglich ist, wodurch ein Durchflussdrosselbereich variiert wird.

19. Ventilanordnung nach Anspruch 17 oder 18, wobei der erste Ventilteil ein scheiben- oder plattenförmiges Element ist.

20. Ventilanordnung nach einem Ansprüche 12 bis 19, wobei die zweite Unterventilanordnung ein zweites Wechselventil ist, und wobei das zweite Ventilteil in seiner ersten Endposition an einem dritte Sitz anliegt und wobei das zweite Ventilteil in seiner zweiten Endposition an einem vierten Sitz anliegt.

21. Ventilanordnung nach einem Ansprüche 12 bis 20, wobei der dritte Durchflussdrosselbereich größer als der vierte Durchflussdrosselbereich ist.

22. Ventilanordnung nach einem Ansprüche 12 bis 21, wobei der zweite Aktuator einen Ringaktuator aufweist, der derart angeordnet ist, auf den Hauptfluss des Dämpfungsmediums in Reaktion auf den zweiten Aktuatordruck zu wirken.

23. Ventilanordnung nach einem der Ansprüche 12 bis 22, wobei die Ventilanordnung ferner ein zweites Ventilteller (3a) oder ein zweites Hauptventilteil (3a) aufweist, das zwischen dem zweiten Aktuator und einem zweiten Sitzteil angeordnet ist, wobei das zweite Ventilteller (3a) oder das zweite Hauptventilteil (3a) derart angeordnet ist, sich für den Hauptfluss von Dämpfungsmedium von der zweiten Kammer zu der ersten Kammer gegen das Sitzteil zu öffnen und zu schließen.

24. Ventilanordnung nach einem der vorhergehenden Ansprüche, wobei der erste Hub ein Kompressionshub oder ein Rückschlaghub des Stoßdämpfers ist, und wobei der zweite Hub der andere des Kompressionshubs oder des Rückschlaghubs ist.

## Revendications

1. Agencement de soupape pour contrôler un écoulement principal d'un fluide amortisseur dans un absorbeur de chocs d'une première chambre (DC2 Pr) vers une deuxième chambre (DC1 Pc) pendant une première course et de la deuxième chambre vers la première chambre pendant une deuxième course, l'agencement de soupape comprenant :
un premier actionneur ayant une première chambre d'actionneur (Vip2) communiquant avec ladite première chambre et ladite deuxième chambre, ledit premier actionneur, pendant ladite première course, étant étudié pour agir sur ledit écoulement principal de fluide amortisseur en réponse à une première pression d'actionnement dans la première chambre d'actionneur ;
**caractérisé par**
une soupape pilote étudiée pour contrôler la première pression d'actionnement, la soupape pilote ayant une chambre pilote (21) en communication fluidique avec la première chambre d'actionneur ;
un premier agencement d'étranglement pour limiter un écoulement de fluide amortisseur de la première chambre d'actionneur (Vip2) vers la chambre pilote (21), ledit premier agencement d'étranglement étant étudié pour fournir un premier trajet d'écoulement (26, 26' ; 126, 127 ; 226, 227 ; 326, 326') limité par une première zone de limitation d'écoulement (126, 127) pendant une première course et pour fournir un deuxième trajet d'écoulement limité par une deuxième zone de limitation d'écoulement (26, 126, 226, 326) pendant la deuxième course ; et
un premier sous agencement de soupape comprenant un premier élément de soupape (124', 224', 324'), ledit premier élément de soupape étant dans une première position finale pendant la première course et étant dans une deuxième position finale pendant la deuxième course, dans lequel ledit première élément de soupape est étudié pour coopérer avec ledit premier agencement d'étranglement de sorte que l'écoulement du fluide amortisseur de la première chambre d'actionneur vers la chambre pilote s'écoule via ledit premier trajet d'écoulement (26, 26' ; 126, 127 ; 226, 227 ; 326, 326') lorsque ledit premier élément de soupape est dans la première position finale et s'écoule via ledit deuxième trajet d'écoulement (26, 126, 226, 326) lorsque ledit premier élément de soupape est dans la deuxième position finale.

2. Agencement de soupape selon la revendication 1, dans lequel le premier élément de soupape est étudié pour coopérer avec un canal ou une partie de canal dudit premier agencement d'étranglement.

3. Agencement de soupape selon la revendication 1 ou 2, dans lequel ledit premier trajet d'écoulement est un premier canal (26' ; 326') et un deuxième canal (26, 326) entre la première chambre d'actionneur et le volume pilote, et
ledit deuxième trajet d'écoulement est le deuxième canal (26, 326) entre la première chambre d'actionneur et la chambre pilote, dans lequel ledit premier canal et le deuxième canal sont disposés en parallèle, et dans lequel
ledit premier élément de soupape est étudié pour bloquer le premier canal (26', 326') lorsque ledit premier élément de soupape est dans la deuxième position finale.

4. Agencement de soupape selon l'une quelconque des revendications précédentes, dans lequel le premier élément de soupape est mobile entre deux ouvertures de canal définissant les première et deuxième positions finales.

5. Agencement de soupape selon l'une quelconque des revendications 2-4, dans lequel le premier élément de soupape est une balle ou un élément arrondi capable de bloquer l'ouverture de canal ou le canal.

6. Agencement de soupape selon la revendication 1 ou 2, dans lequel la première zone de limitation d'écoulement est définie par une première partie de canal (126', 226') et ladite deuxième zone de limitation d'écoulement est définie par une deuxième partie de canal (126, 226), dans lequel la première partie de canal et la deuxième partie de canal sont disposées en série entre la première chambre d'actionneur et la chambre pilote ; et dans lequel
ledit premier élément de soupape est étudié pour contourner la deuxième partie de canal (126, 226) lorsque ledit premier élément de soupape est dans la première position finale et pour forcer l'écoulement de fluide amortisseur de la première chambre d'actionneur vers la chambre pilote via la deuxième partie de canal lorsque ledit premier élément de soupape est dans la deuxième position finale.

7. Agencement de soupape selon la revendication 6, dans lequel le premier élément de soupape comprend une partie flexible formant une partie de paroi de canal mobile entre les première et deuxième positions finales en faisant varier de la sorte une zone de limitation d'écoulement.

8. Agencement de soupape selon la revendication 6 ou 7, dans lequel le premier élément de soupape est une cale ou un élément en forme de plaque.

9. Agencement de soupape selon l'une quelconque des revendications précédentes, dans lequel le premier sous agencement de soupape est une première soupape à deux voies, dans lequel ledit premier élément de soupape bute contre un premier siège dans sa première position finale, et dans lequel le premier élément de soupape bute contre un deuxième siège dans sa deuxième position finale.

10. Agencement de soupape selon l'une quelconque des revendications précédentes, dans lequel ladite première zone de limitation d'écoulement est plus grande que la deuxième zone de limitation d'écoulement.

11. Agencement de soupape selon l'une quelconque des revendications précédentes, ledit agencement de soupape comprenant en outre un premier disque de soupape (3b), ou un premier élément principal de soupape (3b) étant intercalé entre le premier actionneur et une première partie de siège, dans lequel le premier disque de soupape (3b) ou le premier élément principal de soupape (3b) est étudié pour s'ouvrir et se fermer pour l'écoulement principal de fluide amortisseur de la première chambre vers la deuxième chambre contre la partie de siège.

12. Agencement de soupape selon l'une quelconque des revendications précédentes, ledit agencement de soupape comprenant en outre :
un deuxième actionneur ayant une deuxième chambre d'actionneur communiquant avec ladite première chambre et ladite deuxième chambre, ledit deuxième actionneur, pendant ladite deuxième course, étant étudié pour agir sur ledit écoulement principal de fluide amortisseur en réponse à une deuxième pression d'actionnement dans la deuxième chambre d'actionneur ;
un deuxième agencement d'étranglement pour limiter un écoulement de fluide amortisseur de la deuxième chambre d'actionneur vers la chambre pilote, ledit agencement d'étranglement étant étudié pour fournir un troisième trajet d'écoulement limité par une troisième zone de limitation d'écoulement pendant une première course et pour fournir un quatrième trajet d'écoulement limité par une quatrième zone de limitation d'écoulement pendant la deuxième course ; et
un deuxième sous agencement de soupape comprenant un deuxième élément de soupape (24'), ledit deuxième élément de soupape étant dans une première position finale pendant la deuxième course et étant dans une deuxième position finale pendant la première course, dans lequel ledit deuxième élément de soupape est étudié pour coopérer avec ledit deuxième agencement d'étranglement de sorte que l'écoulement de fluide amortisseur de la deuxième chambre d'actionneur vers la chambre pilote s'écoule via ledit troisième trajet d'écoulement lorsque ledit deuxième élément de soupape est dans la première position finale et s'écoule via ledit quatrième trajet d'écoulement lorsque ledit deuxième élément de soupape est dans la deuxième position finale ; et dans lequel
ladite soupape pilote est étudiée pour contrôler la première pression d'actionnement et la deuxième pression d'actionnement, et dans lequel ladite chambre pilote est en communication fluidique avec la première chambre d'actionneur et la deuxième chambre d'actionneur.

13. Agencement de soupape selon la revendication 12, dans lequel le deuxième élément de soupape est étudié pour coopérer avec un canal ou une partie de canal dudit deuxième agencement d'étranglement.

14. Agencement de soupape selon l'une quelconque des revendications 12 ou 13, dans lequel ledit troisième trajet d'écoulement est un troisième canal et un quatrième canal entre la deuxième chambre d'actionneur et la chambre pilote, et ledit quatrième trajet d'écoulement est un quatrième canal entre la deuxième chambre d'actionneur et la chambre pilote,
dans lequel ledit troisième canal et le quatrième canal sont disposés en parallèle, et dans lequel
ledit deuxième élément de soupape est étudié pour bloquer le troisième canal lorsque ledit deuxième élément de soupape est dans la deuxième position finale.

15. Agencement de soupape selon l'une quelconque des revendications 12 à 14, dans lequel le deuxième élément de soupape est mobile entre deux ouvertures de canal définissant les première et deuxième positions finales.

16. Agencement de soupape selon l'une quelconque des revendications 13 à 15, dans lequel le deuxième élément de soupape est une balle ou un élément arrondi capable de bloquer l'ouverture de canal ou le canal.

17. Agencement de soupape selon la revendication 12 ou 13,
dans lequel la troisième zone de limitation d'écoulement est définie par une troisième partie de canal et ladite quatrième zone de limitation d'écoulement est définie par une quatrième partie de canal, dans lequel la troisième partie de canal et la quatrième partie de canal sont disposées en série entre la deuxième chambre d'actionneur et la chambre pilote, et dans lequel
ledit deuxième élément de soupape est étudié pour contourner le quatrième canal lorsque ledit deuxième élément de soupape est dans la première position finale et pour forcer l'écoulement de fluide amortisseur de la deuxième chambre d'actionneur vers la chambre pilote via le quatrième canal lorsque ledit deuxième élément de soupape est dans la deuxième position finale.

18. Agencement de soupape selon la revendication 17,
dans lequel le premier élément de soupape comprend une partie flexible formant une partie de paroi de canal mobile entre les première et deuxième positions finales en faisant varier de la sorte une zone de limitation d'écoulement.

19. Agencement de soupape selon la revendication 17 ou 18, dans lequel le premier élément de soupape est une cale ou un élément en forme de plaque.

20. Agencement de soupape selon l'une quelconque des revendications 12 à 19,
dans lequel le deuxième sous agencement de soupape est une deuxième soupape à deux voies, et dans lequel ledit deuxième élément de soupape bute contre un troisième siège dans sa première position finale, et dans lequel le deuxième élément de soupape bute contre un quatrième siège dans sa deuxième position finale.

21. Agencement de soupape selon l'une quelconque des revendications 12 à 20, dans lequel ladite troisième zone de limitation d'écoulement est plus grande que la quatrième zone de limitation d'écoulement.

22. Agencement de soupape selon l'une quelconque des revendications 12 à 21, dans lequel le deuxième actionneur comprend un actionneur annulaire étudié pour agir sur l'écoulement principal de fluide amortisseur en réponse à la deuxième pression d'actionnement.

23. Agencement de soupape selon l'une quelconque des revendications 12 à 22,
ledit agencement de soupape comprenant en outre un deuxième disque de soupape (3a), ou un deuxième élément principal de soupape (3a) étant intercalé entre le deuxième actionneur et une deuxième partie de siège, dans lequel le deuxième disque de soupape (3b) ou le deuxième élément principal de soupape (3a) est étudié pour s'ouvrir ou se fermer pour l'écoulement principal du fluide amortisseur de la deuxième chambre vers la première chambre contre la partie de siège.

24. Agencement de soupape selon l'une quelconque des revendications précédentes,
dans lequel la première course est l'une parmi une course de compression et une course de rebondissement de l'absorbeur de chocs, et la deuxième course est l'autre parmi la course de compression et la course de rebondissement.
